# EUROPEAN PATENT APPLICATION

(11) **EP 2 903 061 A1**
(43) Date of publication of application: **05.08.2015**
(21) Application number: 13840428.0
(22) Date of filing: 25.09.2013
(51) Int. Cl.: H01M 4/38

(54) **ELECTRODE ACTIVE MATERIAL, METHOD FOR MANUFACTURING ELECTRODE ACTIVE MATERIAL, ELECTRODE, CELL, AND METHOD FOR USING CLATHRATE COMPOUND**

(30) Priority: 26.09.2012 JP 2012211642
(71) Applicant: Nippon Steel & Sumitomo Metal Corporation, Tokyo 100-8071 (JP)
(72) Inventor: NEGI, Noriyuki, Tokyo 100-8071 (JP); NAGATA, Tatsuo, Tokyo 100-8071 (JP); YAMAMOTO, Sukeyoshi, Tokyo 100-8071 (JP); MUNETOH, Shinji, Fukuoka-shi Fukuoka 812-8581 (JP)
(74) Representative: Jackson, Martin Peter
(86) International application number: PCT/JP2013/005689
(87) International publication number: WO 2014/050100

(57) **Abstract**

Provided is an electrode active material containing a clathrate compound that is more likely to withstand load involved in repetition of penetration and desorption of, e.g., lithium ions compared to no guest substance-encapsulating silicon clathrate compounds. An electrode active material according to the present invention includes a clathrate compound. The clathrate compound contains a crystal lattice and a guest substance. The guest substance is encapsulated in the crystal lattice. It is preferable that the clathrate compound be a main component of the electrode active material.

## Description

### TECHNICAL FIELD

The present invention relates to an electrode active material, an electrode active material production method, an electrode, a battery, and a method for using a clathrate compound.

### BACKGROUND ART

In recent years, research and development of clathrate compounds has aggressively been advanced. US2012/0021283A (Patent Literature 1) proposes use of a clathrate compound consisting of silicon alone with no guest substance encapsulated therein (hereinafter referred to as "no guest substance-encapsulating silicon clathrate compound"), as an electrode active material for a metal ion secondary battery such as a lithium ion secondary battery.

The silicon clathrate compound disclosed in Patent Literature 1 is an unstable substance that is in a metastable state. Thus, repetition of penetration and desorption of, e.g., lithium ions to/from the silicon clathrate compound imposes extreme load on the crystal structure thereof. As a result, the silicon clathrate compound may collapse and thereby fail to function as an electrode active material. Furthermore, Patent Literature 1 discloses no information at all regarding a discharge capacity or cycleability of the no guest substance-encapsulating silicon clathrate compound.

### CITATION LIST

### PATENT LITERATURE

Patent Literature 1: US2012/0021283A

### SUMMARY OF INVENTION

An objective of the present invention is to provide an electrode active material having a high discharge capacity or a high cycleability.

An electrode active material according to the present embodiment includes a clathrate compound. The clathrate compound contains a crystal lattice and a guest substance. The guest substance is encapsulated in the crystal lattice.

The electrode active material according to the present embodiment has a high discharge capacity or a high cycleability.

### DESCRIPTION OF EMBODIMENTS

An electrode active material according to the present embodiment includes a clathrate compound. The clathrate compound contains a crystal lattice and a guest substance. The guest substance is encapsulated in the crystal lattice. The clathrate compound is what is called a guest substance-encapsulating clathrate compound.

The clathrate compound may contain another electrode active material (for example, silicon particles, tin particles, graphite particles, silicon-graphite composite particles) as long as such other electrode active material impairs the spirit of the present invention.

Preferably, the clathrate compound according to the present embodiment is a main component of the electrode active material. The main component referred to in the present description means a component that constitutes no less than 50% in volume percent. The clathrate compound may contain unavoidable impurities. However, it is preferable that the unavoidable impurities in the clathrate compound be as few as possible.

An electrode containing the electrode active material according to the present embodiment may be either of a positive electrode and a negative electrode. Preferably, the electrode according to the present embodiment is a negative electrode. Preferably, the electrode according to the present embodiment is used in a nonaqueous electrolyte secondary battery. The "nonaqueous electrolyte secondary battery" referred to in the present description is, for example, a metal ion secondary battery such as a lithium ion secondary battery, a sodium ion secondary battery, a magnesium ion secondary battery or a calcium ion secondary battery.

As a result of diligent studies, the present inventors obtained the following findings. Where an electrode using an electrode active material containing a clathrate compound containing a crystal structure that encapsulates a guest substance is used in a metal ion secondary battery, the metal ion secondary battery exhibits a high cycleability. Therefore, the electrode active material can withstand load involved in repetition of penetration and desorption of, e.g., lithium ions compared to silicon clathrates that encapsulate no guest substance. Furthermore, for a discharge capacity of the electrode, a discharge capacity that is not less than a discharge capacity of graphite (660 to 790 mAh/cc) may be obtained. Therefore, a clathrate compound containing a crystal structure that encapsulates a guest substance can function as an electrode active material.

In the above electrode active material, it is preferable that the clathrate compound be nanograined. In the present description, "nanograined" means that crystal grains of the clathrate compound in the electrode active material are nanograins. "Nanograins" means grains having an average grains diameter of 1 to 300 nm. Use of an electrode active material containing a nanograined clathrate compound significantly enhances a discharge capacity of a metal ion secondary battery. Thus, a nanograined clathrate compound is extremely useful as an electrode active material.

An average crystal grain diameter of the clathrate compound can be obtained by the following method. X-ray diffraction measurement of a clathrate compound is performed by an X-ray diffractometer (RINT-1100 manufactured by Rigaku Corporation) using Cu as a X-ray source. From among peaks of the clathrate compound that have obtained as a result of the measurement, a most intensive peak is identified. Based on a half width of the identified most intensive peak, the average grain diameter is calculated according to the Scherrer equation. Here, a constant K = 0.89.

In the above electrode active material, it is preferable that the guest substance contain at least one element selected from a group consisting of barium (Ba), calcium (Ca) and lithium (Li). It is preferable that the crystal lattice contain at least one element selected from a group consisting of gallium (Ga), aluminum (Al), indium (In), silver (Ag), gold (Au), copper (Cu), nickel (Ni) and cobalt (Co), and at least one element selected from a group consisting of silicon (Si) and tin (Sn). This is because a result of diligent studies by the present inventors shows that containing these elements enables an electrode active material to be produced easily.

In the above electrode active material, it is preferable that the clathrate compound have a composition of AₓB_{y}C_{z}. This is because a result of the diligent studies by the present inventors shows provision of the above composition enables an electrode active material to be produced more easily. The A contains at least one element selected from a group consisting of barium (Ba), calcium (Ca) and lithium (Li). The B contains at least one element selected from a group consisting of indium (In), silver (Ag), gold (Au), copper (Cu), nickel (Ni) and cobalt (Co). The C contains at least one element selected from a group consisting of silicon (Si) and tin (Sn). The x is 7 to 9. The y is 0 to 6. (y+z)/x is 5.1 to 6.6. It is preferable that the z be (46-y). If the A, the B or the C contains two or more elements, a total number of atoms in the elements meets the respective specification of x, y or z.

In the above electrode active material, it is preferable that the clathrate compound have a composition of AₓAl_{y}C_{z} or a composition of AₓGa_{y}C_{z}. This is because a result of the diligent studies of the present inventors shows that a clathrate compound having any of these compositions provides an electrode active material that enhances a discharge capacity, a coulomb efficiency and a cycleability of a metal ion secondary battery in a balanced manner. The A contains at least one element selected from a group consisting of barium (Ba), calcium (Ca) and lithium (Li). The C contains at least one element selected from a group consisting of silicon (Si) and tin (Sn). The x is 7 to 9. The y is 0 to 16. Also, (y+z)/x is 5.1 to 6.6. It is preferable that the z be (46-y). If the A, the B or the C contains two or more elements, a total number of atoms in the elements meets the respective specification of x, y or z.

In the above electrode active material, it is preferable that the clathrate compound have a composition of AₓCu_{y}C_{z}. This is because a result of the diligent studies by the present inventors shows that a clathrate compound having the composition provides an electrode active material that enhances a cycleability of a metal ion secondary battery. The A contains at least one element selected from a group consisting of barium (Ba), calcium (Ca) and lithium (Li). The C contains at least one element selected from a group consisting of silicon (Si) and tin (Sn). The x is 7 to 9. The y is 0 to 6. Also, (y+z)/x is 5.1 to 6.6. It is preferable that the z be (46-y). If the A, the B or the C contains two or more elements, a total number of atoms in the elements meets the respective specification of x, y or z.

In the above electrode active material, it is preferable that the clathrate compound have a composition of AₓNi_{y}C_{z}. This is because a result of the diligent studies by the present inventors shows that a clathrate compound having this composition provides an electrode active material that enhances a cycleability of a metal ion secondary battery. The A contains at least one element selected from a group consisting of barium (Ba), calcium (Ca) and lithium (Li). The C contains at least one element selected from a group consisting of silicon (Si) and tin (Sn). The x is within a range of 7 to 9. The y is within a range of 0 to 6. (y+z)/x is 5.1 to 6.6. It is preferable that the z be (46-y). If the A, the B or the C contains two or more elements, a total number of atoms in the elements meets the respective specification of x, y or z.

In the above-described electrode active material, it is preferable that the clathrate compound have a composition of AₓAg_{y}C_{z}. This is because a result of the diligent studies by the present inventors shows a clathrate compound having this composition provides an electrode active material that enhances a discharge capacity, coulomb efficiency and a cycleability of a metal ion secondary battery to a high level in a balanced manner. The A contains at least one element selected from a group consisting of barium (Ba), calcium (Ca) and lithium (Li). The C contains at least one element selected from a group consisting of silicon (Si) and tin (Sn). The x is within a range of 7 to 9. The y is within a range of 0 to 6. (y+z)/x is 5.1 to 6.6. It is preferable that the z be (46-y). If the A, the B or the C contains two or more elements, a total number of atoms in the elements meets the respective specification of x, y or z.

In the above-described electrode active material, it is preferable that the clathrate compound have a composition of AₓB_{y}Sn_{z}. This is because a result of the diligent studies by the present inventors shows that a clathrate compound having this composition provides an electrode active material that enhances a discharge capacity, coulomb and a cycleability of a metal ion secondary battery to a high level in a balanced manner. The A contains at least one element selected from a group consisting of barium (Ba), calcium (Ca) and lithium (Li). The B contains at least one element selected from a group consisting of indium (In), silver (Ag), gold (Au), copper (Cu), nickel (Ni) and cobalt (Co). The x is 7 to 9. The y is 0 to 6. (y+z)/x is 5.1 to 6.6. It is preferable that the z be (46-y). If the A, the B or the C contains two or more elements, a total number of atoms in the elements meets the respective specification of x, y or z.

An electrode active material production method according to the present embodiment includes a preparation step and a nanograining step. In the preparation step, a clathrate compound is prepared. In the nanograining step, the clathrate compound is nanograined. It is preferable that the clathrate compound contain not only a crystal lattice but also a guest substance. If the clathrate compound contains a guest substance, the guest substance is encapsulated in the crystal lattice. Also, for nanograining, it is suitable to use a ball mill or a bead mill.

In this electrode active material production method, the clathrate compound is nanograined. As described above, the clathrate compound is used as an electrode active material, enabling substantial enhancement in discharge capacity and charge capacity of a metal ion secondary battery.

In the above production method, the clathrate compound may include, for example, an aluminum atom, a silver atom, a first metal atom and a second metal atom. In such case, it is preferable that the first metal atom contain at least one element of barium (Ba), calcium (Ca) and lithium (Li). It is preferable that the second metal atom contain at least one element of silicon (Si) and tin (Sn). This is because an electrode active material that significantly enhances a discharge capacity and a charge capacity of a metal ion secondary battery can be obtained.

A further detailed description of the electrode active material according to the present embodiment described above will be provided below.

As described above, the e electrode active material according to the embodiment of the present invention contains a clathrate compound as a main component. The electrode active material may consist of a clathrate compound alone. The clathrate compound contains a crystal lattice and a guest substance. The guest substance is encapsulated in the crystal lattice. The guest substance can stably exist without covalently binding to the crystal lattice.

It is preferable that the clathrate compound according to the embodiment of the present invention have a composition of AₓB_{y}C_{z}. Aₓ denotes the guest substance, and B_{y}C_{z} denotes the crystal lattice. It is preferable that (y+z) be 46.

It is preferable that the element "A" of the guest substance be at least one element selected from a group consisting of barium (Ba), calcium (Ca) and lithium (Li). Even if the guest substance consists of barium alone, the guest substance can exhibit a sufficient capability as an electrode active substance. However, if a part of a plurality of the guest substances consisting of barium is substituted with calcium, raw material costs can be reduced. Furthermore, a part of a plurality of the guest substances consisting of barium is substituted with lithium, an initial efficiency of an electrode can be enhanced. Therefore, preferably, the "A" contains at least one element selected from a group consisting of Ba, Ca and Li.

Preferably, the "x" is 7 to 9, more preferably 7.9 to 8.1. If the "A" contains two or more elements, the "x" corresponds to a total number of atoms in the elements.

It is preferable that an element indicated by the "B" in the crystal lattice be at least one element selected from a group consisting of indium (In), silver (Ag), gold (Au), copper (Cu), nickel (Ni) and cobalt (Co). Preferably, the "y" is 0 to 16, more preferably 0 to 10, still more preferably 0 to 8, even more preferably 0 to 7, even further preferably 0 to 6, particularly preferably 0 to 5. If the "B" contains at least two or more elements, the "y" corresponds to a total number of atoms in the elements.

Here, it is known that where any of In, Ag, Au, Cu, Ni and Co is contained in elements in the crystal lattice, silicon, in particular, silicon at a C6 site is substituted by the element. A lattice constant of the clathrate compound varies depending on the type and/or amount of the substitution element by which silicon has been substituted. Thus, in a silicon clathrate compound, a part of silicon is substituted by another element, enabling adjustment of a discharge capacity of a metal ion secondary battery.

In particular, where the substitution element is silver (Ag) or gold (Au), even if raw material powder is argon-arc melted and the crystal grain diameter thereby becomes very large, a sufficiently-large discharge capacity of a metal ion secondary battery can be achieved. Reduction in size of crystal grains of such clathrate compound enables further enhancement in cycleability of a metal ion secondary battery.

On the other hand, where the substitution element is any of indium (In), copper (Cu), nickel (Ni) and cobalt (Co), if an alloy of any of these elements is produced by casting and used as it is, no capability of diffusing lithium ions can be exerted. However, if a mechanical shear force is applied to an alloy of any of these elements by, e.g., a ball mill, a bead mill or a planetary mill to reduce the crystal grain diameter, a large capacity can be obtained. In this case, preferably, the "y" is 0 to 6.

Where the substitution element is aluminum (Al) or gallium (Ga), a maximum of 16 silicon (Si) atoms can be substituted by the substitution element. In this case, the substitution site is not limited to the C6 site, and silicon (Si) is randomly substituted by aluminum (Al) or gallium (Ga). In this case, preferably, the "y" is 0 to 16, more preferably 12 to 15.5. If y is within this range, a favorable cycleability of a metal ion secondary battery can be maintained.

It is preferable that an element denoted by the "C" in the crystal lattice be at least one element selected from a group consisting of silicon (Si) and tin (Sn). Preferably, "z" is 25 to 46, more preferably 30 to 46, still more preferably 35 to 46, even more preferably 38 to 46, even further preferably 39 to 46, still even further preferably 40 to 46, particularly preferably 41 to 46. If the "C" contains at least two or more elements, "z" corresponds to a total number of atoms in the elements.

If an element denoted by the "C" is tin (Sn), a specific gravity of the clathrate compound becomes large. Thus, an electrode active substance containing the clathrate compound has a larger volumetric energy density. In this case, preferably, (y+z)/x is 5.1 to 6.6. If (y+z)/x is within this range, a favorable discharge capacity of a metal ion secondary battery can be maintained.

Preferably, an impact force or a shear force can be applied to the clathrate compound to nanograin the crystal grains of the clathrate compound. In this case, a discharge capacity of an electrode can be enhanced and a cycleability of the electrode can also be enhanced.

### <Method for producing electrode active material containing clathrate compound>

An example of a clathrate compound production method according to an embodiment of the present invention will be described. The clathrate compound production method includes a casting step and a grinding step. Preferably, the clathrate compound production method further includes a nanograining step after the grinding step.

In the casting step, under a non-oxidizing atmosphere (under an inert gas atmosphere or a vacuum atmosphere), a raw material mixture is melted by a proper method such as arc melting, plasma melting, high-frequency induction heating or resistance heating. The melted raw material mixture is cooled to produce an ingot of a clathrate compound.

In the grinding step, the ingot is ground to produce powder of the clathrate compound. As necessary, the ground clathrate compound may be subjected to heat treatment under a non-oxidizing atmosphere (under an inert gas atmosphere or a vacuum atmosphere). Before the grinding step, the ingot may be subjected to heat treatment under a non-oxidizing atmosphere.

In the nanograining step, the ground clathrate compound is further ground by, e.g., a rotary-type ball mill, a planetary-type ball mill, a vibrating-type ball mill, a bead mill or an attritor and are nanograined.

If the electrode active material according to the present embodiment consists of the clathrate compound, the electrode active material is produced according to the above-described steps. If the electrode active material contains the above clathrate compound and another substance, the electrode active material is produced by mixing the above clathrate compound and such other substance.

### <Electrode production method>

An electrode using the electrode active material according to the embodiment of the present invention can be produced by a method well known to those skilled in the art. A negative electrode production method will be described below as an example.

For example, a binder such as polyvinylidene fluoride (PVDF), polymethylmethacrylate (PMMA), polytetrafluoroethylene (PTFE) or styrene-butadiene rubber (SBR) is mixed in the above-described electrode active material. In order to provide a negative electrode having sufficient conductivity, carbon material powder such as natural graphite, artificial graphite or acetylene black may be mixed. A solvent such as N-methylpyrrolidone (NMP), dimethylformamide (DMF) or water is added to the resulting mixture, whereby the binder is dissolved. Subsequently, as necessary, the resulting mixture is sufficiently stirred using a homogenizer and glass beads to obtain a slurry.

The slurry is applied to an active substance support such as a rolled copper foil, an electrodeposited copper foil and dried. Subsequently, the dried matter is pressed. According to the above steps, an electrode (negative electrode in this example) is produced.

### <Examples>

The present invention will be described in detail by indicating examples.

### [Example 1]

### <Preparation of negative-electrode active material for lithium ion battery>

A mixture of 12.84 g of barium, 3.71 g of copper and 13.45 g of silicon was prepared as a raw material. A composition of the raw material corresponded to Ba₈Cu₅Si₄₁. To cast the raw material, the raw material was melted in an argon arc furnace and was cooled by a water-cooling mold. A cooling rate of solidification during the casting was approximately 100°C/second. A resulting ingot was ground using an agate mortar and the ground product was sieved via a sieve with openings of 20 µm. Then, the ground product that has passed through the openings of 20 µm was used as a negative-electrode active material for a lithium ion battery. A compound composition of the negative-electrode active material was identified by means of a WDX analysis method (using a wavelength-dispersive X-ray spectrometer). As a result, the compound composition was Ba₈Cu₅Si₄₁. Therefore, where the composition of the negative-electrode active material is AₓB_{y}C_{z} as described above, x (= 8) was within a range of 7 to 9, y (= 5) was within a range of 0 to 6, and (y+z)/x(= 5.75) was within a range of 5.1 to 6.6.

### <Battery characterization of negative electrode manufactured from negative-electrode active material for lithium ion battery>

### (1) Electrode manufacturing

15 weight parts of acetylene black (conductivity-providing agent), 5 weight parts of SBR (styrene-butadiene rubber) (binder) and 5 weight parts of CMC (carboxymethyl cellulose) were mixed in 100 weight parts of the above-described negative-electrode active material for a lithium ion battery. Subsequently, ion exchange water (solvent) was added to the mixture to produce a negative electrode mixture slurry. This negative electrode mixture slurry was applied to a copper foil (current collector) with a thickness of 17 µm by means of a doctor blade method. An amount of the application was 10 to 11 mg/cm². The applied liquid was dried and a film was thereby obtained, and then the film was stamped into a disk shape with a diameter of 13 mm. The disk was pressurized by a press-molding machine to manufacture an electrode having an electrode density of approximately 1.30 g/cm³. The electrode density of the resulting electrode was obtained by measuring a thickness of the electrode via a micrometer to calculate a volume thereof and further measuring a mass of the disk (part of the disk excluding the copper foil).

### (2) Battery manufacturing

The above electrode and an Li metal foil having a polarity opposite to that of the electrode were disposed on opposite sides of a polyolefin separator (Celgard LLC) to manufacture an electrode assembly. An electrolytic solution was injected into the electrode assembly to manufacture a coin-shape, nonaqueous test cell with a cell size of 2016. For the electrolytic solution, a mixed solvent in which LiPF₆ was used as a supporting electrolyte, and LiPF₆: ethylene carbonate (EC) : ethylmethyl carbonate (EMC) : dimethyl carbonate (DMC) : vinylene carbonate (VC) : fluoroethylene carbonate (FEC) = 16 : 48 : 23 : 16 : 1 : 8 (mass ratio) was used.

### (3) Evaluation of discharge capacity, coulomb efficiency and cycleability

In the nonaqueous test cell, first, constant-current doping (insertion of lithium ions into the electrode, which corresponds to charging of a lithium ion secondary battery) was performed with a current density of 0.5 mA/cm² until a potential difference became 0 (zero) V against working electrode. Subsequently, while 0V was maintained, doping was continued at a constant voltage until 5 µA/cm² was reached, to measure a doping capacity. Next, undoping (desorption of lithium ions from the electrode, which corresponds to discharging of a lithium ion secondary battery) was performed with a constant current of 0.5 mA/cm² until a potential difference of 1.5 V was reached, to measure an undoping capacity. The doping capacity and the undoping capacity in this case correspond to a charge capacity and a discharge capacity where the electrode is used as a negative electrode of a lithium ion secondary battery. Therefore, the measured doping capacity was determined as a charge capacity, and the measured undoping capacity was determined as a discharge capacity. In the present example, a volumetric discharge capacity of the negative-electrode active material for a lithium ion battery according to the present example alone was calculated from the charge capacity and the discharge capacity measured as described above, taking a capacity of the acetylene black and a capacity of the binder into account. The discharge capacity of the negative-electrode active material according to the present example was 423 mAh/cc (See Table 1). Since a doping capacity/undoping capacity ratio corresponds to a discharge capacity/charge capacity ratio of a lithium ion secondary battery, this ratio was determined as a coulomb efficiency. A coulomb efficiency of the nonaqueous test cell according to the present example was 59.0% (See Table 1).

A cycleability was measured using a coin cell that is similar to the above-indicated one. In this test cell, from a first cycle onwards, doping (corresponding to charging) was performed with a constant current of 0.5 mA/cm² until a potential difference of 5 mV was reached. Subsequently, while 5 mV was kept, the doping was continued at a constant voltage until 50 µA/cm² was reached. Next, undoping (corresponding to discharging) was performed at a constant current of 0.5 mA/cm² until a potential difference of 1.5 V was reached, to measure an undoping capacity. The undoping capacity in this case was determined as a discharge capacity.

Under conditions that were the same as above, doping and undoping were repeated 30 times, and a ratio of "discharge capacity in a 30-th cycle" to "discharge capacity in a first cycle" (capacity maintenance rate) was calculated. Using the calculated capacity maintenance rate as an index, the cycleability was evaluated. If the capacity maintenance rate is 90% or more, the cell is favorable for a battery for practical use. The capacity maintenance rate of the nonaqueous test cell according to the present example was 302% and thus high (See Table 1).

Note that a discharge capacity of natural graphite, which has high crystallinity, is around 660 to 790 mAh/cc.

### [Example 2]

A mixture of 12.66 g of barium, 4.39 g of copper and 12.95 g of silicon was prepared as a raw material. A composition of the raw material corresponded to Ba₈Cu₆Si₄₀. The raw material was melted in an argon arc furnace and was cooled by a water-cooling mold. With the rest of the conditions that was similar to that of Example 1, a negative-electrode active material for a lithium ion battery was produced. Using the negative-electrode active material, battery characterization of a negative electrode was performed in such a manner as in Example 1. A compound composition of the negative-electrode active material for a lithium ion battery was Ba₈Cu₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6.

A discharge capacity of the negative-electrode active material according to the present example was 398 mAh/cc. Also, a coulomb efficiency of the nonaqueous test cell according to the present example was 52.6%. Also, a capacity maintenance rate of the nonaqueous test cell according to the present example was 354% and thus high (See Table 1).

### [Example 3]

A mixture of 12.49 g of barium, 5.06 g of copper and 12.45 g of silicon was prepared as a raw material. A composition of the raw material corresponded to Ba₈Cu₇Si₃₉. The raw material was melted in an argon arc furnace and was cooled by a water-cooling mold. With the rest of the conditions that was similar to that of Example 1, a negative-electrode active material for a lithium ion battery was produced. Using the negative-electrode active material, battery characterization of a negative electrode was performed in such a manner as in Example 1. A compound composition of the negative-electrode active material for a lithium ion battery was Ba₈Cu₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6.

A discharge capacity of the negative-electrode active material according to the present example was 348 mAh/cc. Also, a coulomb efficiency of the nonaqueous test cell according to the present example was 51.3%. Also, a capacity maintenance rate of the nonaqueous test cell according to the present example was 331% and thus high (See Table 1).

### [Example 4]

A mixture of 12.96 g of barium, 3.46 g of nickel and 13.58 g of silicon was prepared as a raw material. A composition of the raw material corresponded to Ba₈Ni₅Si₄₁. The raw material was melted in an argon arc furnace and was cooled by a water-cooling mold. With the rest of the conditions that was similar to that of Example 1, a negative-electrode active material for a lithium ion battery was produced. Using the negative-electrode active material, battery characterization of a negative electrode was performed in such a manner as in Example 1. A compound composition of the negative-electrode active material for a lithium ion battery was Ba₈Ni₅Si₄₁. Where the composition of the negative-electrode active material is AₓB_{y}C_{z} as described above, x (= 8) was within a range of 7 to 9, y (= 5) was within a range of 0 to 6, and (y+z)/x (= 5.75) was within a range of 5.1 to 6.6.

A discharge capacity of the negative-electrode active material according to the present example was 815 mAh/cc. A coulomb efficiency of the nonaqueous test cell according to the present example was 70.0%. A capacity maintenance rate of the nonaqueous test cell according to the present example was 224% and thus high (See Table 1).

### [Example 5]

A mixture of 12.80 g of barium, 4.10 g of nickel and 13.09 g of silicon was prepared as a raw material. A composition of the raw material corresponded to Ba₈Ni₆Si₄₀. The raw material was melted in an argon arc furnace and was cooled by a water-cooling mold. With the rest of the conditions that was similar to that of Example 1, a negative-electrode active material for a lithium ion battery was produced. Using the negative-electrode active material, battery characterization of a negative electrode was performed in such a manner as in Example 1. A compound composition of the negative-electrode active material for a lithium ion battery was Ba₈Ni₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6.

A discharge capacity of the negative-electrode active material according to the present example was 469 mAh/cc. Also, a coulomb efficiency of the nonaqueous test cell according to the present example was 58.8%. Also, a capacity maintenance rate of the nonaqueous test cell according to the present example was 362% and thus high (See Table 1).

### [Example 6]

A mixture of 12.65 g of barium, 4.73 g of nickel and 12.62 g of silicon was prepared as a raw material. A composition of the raw material corresponded to Ba₈Ni₇Si₃₉. The raw material was melted in an argon arc furnace and was cooled by a water-cooling mold. With the rest of the conditions that was similar to that of Example 1, a negative-electrode active material for a lithium ion battery was produced. Using the negative-electrode active material, battery characterization of a negative electrode was performed in such a manner as in Example 1. A compound composition of the negative-electrode active material for a lithium ion battery was Ba₈Ni₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6.

A discharge capacity of the negative-electrode active material according to the present example was 335 mAh/cc. A coulomb efficiency of the nonaqueous test cell according to the present example was 53.1%. A capacity maintenance rate of the nonaqueous test cell according to the present example was 325% and thus high (See Table 1).

### [Example 7]

A mixture of 11.82 g of barium, 5.80 g of silver and 12.38 g of silicon was prepared as a raw material. A composition of the raw material corresponded to Ba₈Ag₅Si₄₁. The raw material was melted in an argon arc furnace and was cooled by a water-cooling mold. With the rest of the conditions that was similar to that of Example 1, a negative-electrode active material for a lithium ion battery was produced. Using the negative-electrode active material, battery characterization of a negative electrode was performed in such a manner as in Example 1. A compound composition of the negative-electrode active material for a lithium ion battery was Ba₈Ag₅Si₄₁. Where the composition of the negative-electrode active material is AₓB_{y}C_{z} as described above, x (= 8) was within a range of 7 to 9, y (= 5) was within a range of 0 to 6, and (y+z)/x (= 5.75) was within a range of 5.1 to 6.6.

A discharge capacity of the negative-electrode active material according to the present example was 5405 mAh/cc, and was thus higher than the discharge capacity of natural graphite (660 to 790 mAh/cc), which has high crystallinity. A coulomb efficiency of the nonaqueous test cell according to the present example was 83.3%. Also, a capacity maintenance rate of the nonaqueous test cell according to the present example was 36% (See Table 1).

### [Example 8]

A mixture of 11.49 g of barium, 6.77 g of silver and 11.75 g of silicon was prepared as a raw material. A composition of the raw material corresponded to Ba₈Ag₆Si₄₀. The raw material was melted in an argon arc furnace and was cooled by a water-cooling mold. With the rest of the conditions that was similar to that of Example 1, a negative-electrode active material for a lithium ion battery was produced. Using the negative-electrode active material, battery characterization of a negative electrode was performed in such a manner as in Example 1. A compound composition of the negative-electrode active material for a lithium ion battery was Ba₈Ag₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6.

A discharge capacity of the negative-electrode active material according to the present example was 5525 mAh/cc, and was thus higher than the discharge capacity of natural graphite (660 to 790 mAh/cc), which has high crystallinity. A coulomb efficiency of the nonaqueous test cell according to the present example was 82.9%. A capacity maintenance rate of the nonaqueous test cell according to the present example was 30% (See Table 1).

### [Example 9]

A mixture of 11.18 g of barium, 7.68 g of silver and 11.14 g of silicon was prepared as a raw material. A composition of the raw material corresponded to Ba₈Ag₇Si₃₉. The raw material was melted in an argon arc furnace and was cooled by a water-cooling mold. With the rest of the conditions that was similar to that of Example 1, a negative-electrode active material for a lithium ion battery was produced. Using the negative-electrode active material, battery characterization of a negative electrode was performed in such a manner as in Example 1. A compound composition of the negative-electrode active material for a lithium ion battery was Ba₈Ag₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6.

A discharge capacity of the negative-electrode active material according to the present example was 5693 mAh/cc, and was thus higher than the discharge capacity of natural graphite (660 to 790 mAh/cc), which has high crystallinity. A coulomb efficiency of the nonaqueous test cell according to the present example was 83.4%. A capacity maintenance rate of the nonaqueous test cell according to the present example was 32% (See Table 1).

### [Example 10]

A mixture of 12.80 g of barium, 4.12 g of cobalt, and 13.09 g of silicon was prepared as a raw material. A composition of the raw material corresponded to Ba₈Co₆Si₄₀. The raw material was melted in an argon arc furnace and was cooled by a water-cooling mold. With the rest of the conditions that was similar to that of Example 1, a negative-electrode active material for a lithium ion battery was produced. Using the negative-electrode active material, battery characterization of a negative electrode was performed in such a manner as in Example 1. A compound composition of the negative-electrode active material for a lithium ion battery was Ba₈Co₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6.

A discharge capacity of the negative-electrode active material according to the present example was 581 mAh/cc. A coulomb efficiency of the nonaqueous test cell according to the present example was 64.3%. A capacity maintenance rate of the nonaqueous test cell according to the present example was 328% and thus high (See Table 1).

### [Example 11]

A mixture of 13.89 g of barium, 5.46 g of aluminum and 10.65 g of silicon was prepared as a raw material. A composition of the raw material corresponded to Ba₈Al₁₆Si₃₀. The raw material was melted in an argon arc furnace and was cooled by a water-cooling mold. With the rest of the conditions that was similar to that of Example 1, a negative-electrode active material for a lithium ion battery was produced. Using the negative-electrode active material, battery characterization of a negative electrode was performed in such a manner as in Example 1. A compound composition of the negative-electrode active material for a lithium ion battery was Ba₈Al₁₆Si₃₀. Where the composition of the negative-electrode active material is AₓB_{y}C_{z} as described above, x (= 8) was within a range of 7 to 9, y (=16) was within a range of 0 to 16, and (y+z)/x (= 5.75) was within a range of 5.1 to 6.6.

A discharge capacity of the negative-electrode active material according to the present example was 288 mAh/cc. A coulomb efficiency of the nonaqueous test cell according to the present example was 55.3%. A capacity maintenance rate of the nonaqueous test cell according to the present example was 163% and thus high (See Table 1).

### [Example 12]

A mixture of 12.55 g of barium, 0.92 g of aluminum, 3.70 g of silver and 12.83 g of silicon was prepared as a raw material. A composition of the raw material corresponded to Ba₈Al₃Ag₃Si₃₀. The raw material was melted in an argon arc furnace and was cooled by a water-cooling mold. With the rest of the conditions that was similar to that of Example 1, a negative-electrode active material for a lithium ion battery was produced. As described above, the negative-electrode active material was formed of aluminum atoms, silver atoms, barium, which corresponds to first metal atoms, and silicon, which corresponds to second metal atoms.

Using the negative-electrode active material, battery characterization of a negative electrode was performed in such a manner as in Example 1. A compound composition of the negative-electrode active material for a lithium ion battery was non-identifiable.

A discharge capacity of the negative-electrode active material according to the present example was 2141 mAh/cc, and was thus higher than the discharge capacity of natural graphite (660 to 790 mAh/cc), which has high crystallinity. A coulomb efficiency of the nonaqueous test cell according to the present example was 74.1%. A capacity maintenance rate of the nonaqueous test cell according to the present example was 110% and thus high (See Table 1).

### [Example 13]

In Example 13, a ground product that has passed through openings of 20 µm was nanograined. With the rest of the conditions that was similar to that of Example 1, a negative-electrode active material for a lithium ion battery was produced. The nanograining was performed using a Super Misuni (manufactured by Nissin Giken Corporation). More specifically, 100 g of SUJ2 balls each having a diameter of approximately 8 mm were put into 10 g of the ground product, and ball mill processing was performed for 40 hours. X-ray diffraction measurement of the resulting nanograins was performed by an X-ray diffractometer (RINT-1100 manufactured by Rigaku Corporation). As a result, diffraction peaks were observed, and thus, it turned out that the nanograins were crystalline products.

An average crystal grain diameter of the clathrate compound was obtained by the following method. From among the peaks of the clathrate compound obtained by means of the X-ray diffractometer using Cu as a radiation source, a most intensive peak was identified. In Ba₈Cu₅Si₄₁ in Example 13, the most intensive peak corresponded to an intensity peak of [321]. Based on a half width of the identified most intensive peak, the average crystal gain diameter was calculated according to the Scherrer equation (constant K = 0.89). The average crystal grain diameter of the clathrate compound in Example 13 that was obtained by this measurement method was 10.4 nm.

A compound composition of the negative-electrode active material was Ba₈Cu₅Si₄₁. Where the composition of the negative-electrode active material is AₓB_{y}C_{z} as described above, x (= 8) was within a range of 7 to 9, y (= 5) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 2842 mAh/cc, and was higher than the discharge capacity of high-crystallinity graphite. Furthermore, the discharge capacity of the present example was higher than that of Example 1 in which no nanograining was performed. A coulomb efficiency of the nonaqueous test cell according to the present example was 80.6%. A capacity maintenance rate of the nonaqueous test cell according to the present example was 90.2% and thus high (See Table 2).

### [Example 14]

In Example 14, a mixture of 12.66 g of barium, 4.39 g of copper and 12.95 g of silicon was prepared as a raw material. A composition of the raw material corresponded to Ba₈Cu₆Si₄₀. The raw material was melted in an argon arc furnace and was cooled by a water-cooling mold. Furthermore, the ground product that has passed through openings of 20 µm was nanograined. An average crystal grain diameter was 8.2 nm. With the rest of the conditions that was similar to that of Example 1, a negative-electrode active material for a lithium ion battery was produced.

X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Cu₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 2615 mAh/cc, and was higher than the discharge capacity of high-crystallinity graphite. Furthermore, the discharge capacity in the present example was higher than that of Example 2 in which no nanograining was performed. A coulomb efficiency of the nonaqueous test cell according to the present example was 83.1%. A capacity maintenance rate of the nonaqueous test cell according to the present example was 93.1% and thus high (See Table 2).

### [Example 15]

A mixture of 12.49 g of barium, 5.06 g of copper and 12.45 g of silicon was prepared as a raw material. A composition of the raw material corresponded to Ba₈Cu₇Si₃₉. The raw material was melted in an argon arc furnace and was cooled by a water-cooling mold. Furthermore, the ground product that has passed through openings of 20 µm was nanograined. An average crystal grain diameter was 15.4 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Cu₆Si₄₀. Where the composition of the negative-electrode active material is AₓB_{y}C_{z} as described above, x (= 8) was within a range of 7 to 9, y (= 6) was within a range of 0 to 6, and (y+z)/x

(= 5.75) was within a range of 5.1 to 6.6. Using the negative-electrode active material, battery characterization of a negative electrode was performed in such a manner as in Example 1.

A discharge capacity of the negative-electrode active material according to the present example was 2389 mAh/cc, and was thus higher than the discharge capacity of natural graphite (660 to 790 mAh/cc), which has high crystallinity. Furthermore, the discharge capacity in the present example was higher than that of Example 3 in which no nanograining was performed. A coulomb efficiency of the nonaqueous test cell according to the present example was 81.3%. A capacity maintenance rate of the nonaqueous test cell according to the present example was 96.1% and thus high (See Table 2).

### [Example 16]

A mixture of 12.32 g of barium, 5.70 g of copper and 11.97 g of silicon was prepared as a raw material. A composition of the raw material corresponded to Ba₈Cu₈Si₃₈. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Cu₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 996 mAh/cc, and was thus higher than the discharge capacity of natural graphite (660 to 790 mAh/cc), which has high crystallinity. A coulomb efficiency of the nonaqueous test cell according to the present example was 79.4%. A capacity maintenance rate of the nonaqueous test cell according to the present example was 87.3% (See Table 2).

### [Example 17]

A mixture of 11.69 g of barium, 4.64 g of copper and 13.67 g of silicon was prepared as a raw material. A composition of the raw material corresponded to Ba₇Cu₆Si₄₀. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Cu₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 1682 mAh/cc, and was thus higher than the discharge capacity of natural graphite (660 to 790 mAh/cc), which has high crystallinity. A coulomb efficiency of the nonaqueous test cell according to the present example was 75.4%. A capacity maintenance rate of the nonaqueous test cell according to the present example was 90.1 % and thus high (See Table 2).

### [Example 18]

A mixture of 13.53 g of barium, 4.17 g of copper and 12.30 g of silicon was prepared as a raw material. A composition of the raw material corresponded to Ba₉Cu₆Si₄₀. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Cu₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 1735 mAh/cc, and was thus higher than the discharge capacity of natural graphite (660 to 790 mAh/cc), which has high crystallinity. A coulomb efficiency of the nonaqueous test cell according to the present example was 76.8%. A capacity maintenance rate of the nonaqueous test cell according to the present example was 88.4% (See Table 2).

### [Example 19]

A mixture of 10.62 g of barium, 4.91 g of copper and 14.47 g of silicon was prepared as a raw material. A composition of the raw material corresponded to Ba₆Cu₆Si₄₀. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Cu₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 875 mAh/cc, and was thus higher than the discharge capacity of natural graphite (660 to 790 mAh/cc), which has high crystallinity. A coulomb efficiency of the nonaqueous test cell according to the present example was 63.7%. A capacity maintenance rate of the nonaqueous test cell according to the present example was 90.4% and thus high (See Table 2).

### [Example 20]

A mixture of 14.32 g of barium, 3.97 g of copper and 11.71 g of silicon was prepared as a raw material. A composition of the raw material corresponded to Ba₁₀Cu₆Si₄₀. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Cu₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 721 mAh/cc. A coulomb efficiency of the nonaqueous test cell according to the present example was 70.1%. A capacity maintenance rate of the nonaqueous test cell according to the present example was 93.1 % and thus high (See Table 2).

### [Example 21]

A mixture of 12.96 g of barium, 3.46 g of nickel and 13.58 g of silicon was prepared as a raw material. A composition of the raw material corresponded to Ba₈Ni₅Si₄₁. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Ni₅Si₄₁. Where the composition of the negative-electrode active material is AₓB_{y}C_{z} as described above, x (= 8) was within a range of 7 to 9, y (= 5) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 3324 mAh/cc, and was thus higher than the discharge capacity of natural graphite (660 to 790 mAh/cc), which has high crystallinity. Furthermore, the discharge capacity in the present example was higher than that of Example 4 in which no nanograining was performed. A coulomb efficiency of the nonaqueous test cell according to the present example was 78.6%. A capacity maintenance rate of the nonaqueous test cell according to the present example was 85.2% (See Table 2).

### [Example 22]

A mixture of 12.80 g of barium, 4.10 g of nickel and 13.09 g of silicon was prepared as a raw material. A composition of the raw material corresponded to Ba₈Ni₆Si₄₀. The raw material was melted in an argon arc furnace and was cooled by a water-cooling mold. Furthermore, the ground product that has passed through openings of 20 µm was nanograined. An average crystal grain diameter was 28.5 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Ni₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 3071 mAh/cc, and was thus higher than the discharge capacity of natural graphite (660 to 790 mAh/cc), which has high crystallinity. Furthermore, the discharge capacity in the present example was higher than that of Example 5 in which no nanograining was performed. A coulomb efficiency of the nonaqueous test cell according to the present example was 77.1%. A capacity maintenance rate of the nonaqueous test cell according to the present example was 91.4% and thus high (See Table 2).

### [Example 23]

A mixture of 12.65 g of barium, 4.73 g of nickel and 12.62 g of silicon was prepared as a raw material. A composition of the raw material corresponded to Ba₈Ni₇Si₃₉. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Ni₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 2886 mAh/cc, and was thus higher than the discharge capacity of natural graphite (660 to 790 mAh/cc), which has high crystallinity. Furthermore, the discharge capacity in the present example was higher than that of Example 6 in which no nanograining was performed. A coulomb efficiency of the nonaqueous test cell according to the present example was 75.8%. A capacity maintenance rate of the nonaqueous test cell according to the present example was 99.6% and thus high (See Table 2).

### [Example 24]

A mixture of 12.51 g of barium, 5.35 g of nickel and 12.15 g of silicon was prepared as a raw material. A composition of the raw material corresponded to Ba₈Ni₈Si₃₈. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Ni₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 845 mAh/cc, and was thus higher than the discharge capacity of natural graphite (660 to 790 mAh/cc), which has high crystallinity. A coulomb efficiency of the nonaqueous test cell according to the present example was 80.6%. A capacity maintenance rate of the nonaqueous test cell according to the present example was 89.4% (See Table 2).

### [Example 25]

A mixture of 11.83 g of barium, 4.34 g of nickel and 13.83 g of silicon was prepared as a raw material. A composition of the raw material corresponded to Ba₇Ni₆Si₄₀. The raw material was meltedin an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Ni₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 1811 mAh/cc, and was thus higher than the discharge capacity of natural graphite (660 to 790 mAh/cc), which has high crystallinity. A coulomb efficiency of the nonaqueous test cell according to the present example was 76.8%. A capacity maintenance rate of the nonaqueous test cell according to the present example was 85.4% (See Table 2).

### [Example 26]

A mixture of 13.67 g of barium, 3.90 g of nickel and 12.43 g of silicon was prepared as a raw material. A composition of the raw material corresponded to Ba₉Ni₆Si₄₀. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Ni₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 1463 mAh/cc, and was thus higher than the discharge capacity of natural graphite (660 to 790 mAh/cc), which has high crystallinity. A coulomb efficiency of the nonaqueous test cell according to the present example was 77.9%. A capacity maintenance rate of the nonaqueous test cell according to the present example was 83.5% (See Table 2).

### [Example 27]

A mixture of 10.75 g of barium, 4.59 g of nickel and 14.66 g of silicon was prepared as a raw material. A composition of the raw material corresponded to Ba₆Ni₆Si₄₀. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Ni₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 931 mAh/cc, and was thus higher than the discharge capacity of natural graphite (660 to 790 mAh/cc), which has high crystallinity. A coulomb efficiency of the nonaqueous test cell according to the present example was 72.1%. A capacity maintenance rate of the nonaqueous test cell according to the present example was 91.3% and thus high (See Table 2).

### [Example 28]

A mixture of 14.46 g of barium, 3.71 g of nickel and 11.83 g of silicon was prepared as a raw material. A composition of the raw material corresponded to Ba₁₀Ni₆Si₄₀. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Ni₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 914 mAh/cc, and was thus higher than the discharge capacity of natural graphite (660 to 790 mAh/cc), which has high crystallinity. A coulomb efficiency of the nonaqueous test cell according to the present example was 69.0%. A capacity maintenance rate of the nonaqueous test cell according to the present example was 94.6% and thus high (See Table 2).

### [Example 29]

A mixture of 11.82 g of barium, 5.80 g of silver and 12.38 g of silicon was prepared as a raw material. A composition of the raw material corresponded to Ba₈Ag₅Si₄₁. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Ag₅Si₄₁. Where the composition of the negative-electrode active material is AₓB_{y}C_{z} as described above, x (= 8) was within a range of 7 to 9, y (= 5) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 5257 mAh/cc, and was thus higher than the discharge capacity of natural graphite (660 to 790 mAh/cc), which has high crystallinity. A coulomb efficiency of the nonaqueous test cell according to the present example was 84.3%. A capacity maintenance rate of the nonaqueous test cell according to the present example was 70.6% (See Table 3).

### [Example 30]

A mixture of 11.49 g of barium, 6.77 g of silver and 11.75 g of silicon was prepared as a raw material. A composition of the raw material corresponded to Ba₈Ag₆Si₄₀. The raw material was melted in an argon arc furnace and was cooled by a water-cooling mold. Furthermore, the ground product that has passed through openings of 20 µm was nanograined. An average crystal grain diameter was 216.8 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Ag₆Si₄₀. Where the composition of the negative-electrode active material is AₓB_{y}C_{z} as described above, x (= 8) was within a range of 7 to 9, y (= 6) was within a range of 0 to 6, and (y+z)/x

(= 5.75) was within a range of 5.1 to 6.6. Using the negative-electrode active material, battery characterization of a negative electrode was performed in such a manner as in Example 1.

A discharge capacity of the negative-electrode active material according to the present example was 5391 mAh/cc, and was thus higher than the discharge capacity of natural graphite (660 to 790 mAh/cc), which has high crystallinity. A coulomb efficiency of the nonaqueous test cell according to the present example was 83.2%. A capacity maintenance rate of the nonaqueous test cell according to the present example was 71.0% (See Table 3).

### [Example 31]

A mixture of 11.18 g of barium, 7.68 g of silver and 11.14 g of silicon was prepared as a raw material. A composition of the raw material corresponded to Ba₈Ag₇Si₃₉. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Ag₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 5601 mAh/cc, and was thus higher than the discharge capacity of natural graphite (660 to 790 mAh/cc), which has high crystallinity. A coulomb efficiency of the nonaqueous test cell according to the present example was 83.5%. A capacity maintenance rate of the nonaqueous test cell according to the present example was 74.4% (See Table 3).

### [Example 32]

A mixture of 10.88 g of barium, 8.55 g of silver and 10.57 g of silicon was prepared as a raw material. A composition of the raw material corresponded to Ba₈Ag₈Si₃₈. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the nanograins obtained as described above was performed by an X-ray diffractometer (RINT-1100). As a result, diffraction peaks were observed, and thus, it turned out that the nanograins were crystalline products. Also, a compound composition of the negative-electrode active material for a lithium ion battery was Ba₈Ag₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 3215 mAh/cc, and was thus higher than the discharge capacity of natural graphite (660 to 790 mAh/cc), which has high crystallinity. A coulomb efficiency of the nonaqueous test cell according to the present example was 72.1%. A capacity maintenance rate of the nonaqueous test cell according to the present example was 81.3% (See Table 3).

### [Example 33]

A mixture of 10.56 g of barium, 7.11 g of silver and 12.34 g of silicon was prepared as a raw material. A composition of the raw material corresponded to Ba₇Ag₆Si₄₀. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Ag₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 4867 mAh/cc, and was thus higher than the discharge capacity of natural graphite (660 to 790 mAh/cc), which has high crystallinity. A coulomb efficiency of the nonaqueous test cell according to the present example was 76.2%. A capacity maintenance rate of the nonaqueous test cell according to the present example was 83.0% (See Table 3).

### [Example 34]

A mixture of 12.33 g of barium, 6.46 g of silver and 11.21 g of silicon was prepared as a raw material. A composition of the raw material corresponded to Ba₉Ag₆Si₄₀. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Ag₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 4993 mAh/cc, and was thus higher than the discharge capacity of natural graphite (660 to 790 mAh/cc), which has high crystallinity. A coulomb efficiency of the nonaqueous test cell according to the present example was 75.8%. A capacity maintenance rate of the nonaqueous test cell according to the present example was 84.2% (See Table 3).

### [Example 35]

A mixture of 9.53 g of barium, 7.48 g of silver and 12.99 g of silicon was prepared as a raw material. A composition of the raw material corresponded to Ba₆Ag₆Si₄₀. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Ag₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 3684 mAh/cc, and was thus higher than the discharge capacity of natural graphite (660 to 790 mAh/cc), which has high crystallinity. A coulomb efficiency of the nonaqueous test cell according to the present example was 71.0%. A capacity maintenance rate of the nonaqueous test cell according to the present example was 82.6% (See Table 3).

### [Example 36]

A mixture of 13.10 g of barium, 6.18 g of silver and 10.72 g of silicon was prepared as a raw material. A composition of the raw material corresponded to Ba₁₀Ag₆Si₄₀. The raw material was melted in an argon arc furnace cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Ag₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 3259 mAh/cc, and was thus higher than the discharge capacity of natural graphite (660 to 790 mAh/cc), which has high crystallinity. A coulomb efficiency of the nonaqueous test cell according to the present example was 69.5%. A capacity maintenance rate of the nonaqueous test cell according to the present example was 83.1% (See Table 3).

### [Example 37]

A mixture of 12.80 g of barium, 4.12 g of cobalt and 13.09 g of silicon was prepared as a raw material. A composition of the raw material corresponded to Ba₈Co₆Si₄₀. The raw material was melted in an argon arc furnace and was cooled by a water-cooling mold. Furthermore, the ground product that has passed through openings of 20 µm was nanograined. An average crystal grain diameter was 53.2 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Co₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 3418 mAh/cc, and was thus higher than the discharge capacity of natural graphite (660 to 790 mAh/cc), which has high crystallinity. Furthermore, the discharge capacity in the present example was higher than that of Example 10 in which no nanograining was performed. A coulomb efficiency of the nonaqueous test cell according to the present example was 80.6%. A capacity maintenance rate of the nonaqueous test cell according to the present example was 91.7% and thus high (See Table 3).

### [Example 38]

A mixture of 13.89 g of barium, 5.46 g of aluminum and 10.65 g of silicon was prepared as a raw material. A composition of the raw material corresponded to Ba₈Al₁₆Si₃₀. The raw material was melted in an argon arc furnace and was cooled by a water-cooling mold. Furthermore, the ground product that has passed through openings of 20 µm was nanograined. An average crystal grain diameter of the grains was 14.3 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Al₁₆Si₃₀. Where the composition of the negative-electrode active material is AₓB_{y}C_{z} as described above, x (= 8) was within a range of 7 to 9, y (=16) was within a range of 0 to 16, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 2378 mAh/cc, and was thus higher than the discharge capacity of natural graphite (660 to 790 mAh/cc), which has high crystallinity. Furthermore, the discharge capacity in the present example was higher than that of Example 11 in which no nanograining was performed. A coulomb efficiency of the nonaqueous test cell according to the present example was 80.4%. A capacity maintenance rate of the nonaqueous test cell according to the present example was 92.1% and thus high (See Table 3).

### [Example 39]

A mixture of 13.90 g of barium, 5.80 g of aluminum and 10.30 g of silicon was prepared as a raw material. A composition of the raw material corresponded to Ba₈Al₁₇Si₂₉. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Al₁₆Si₃₀. Where the composition of the negative-electrode active material is AₓB_{y}C_{z} as described above, x (= 8) was within a range of 7 to 9, y (=16) was within a range of 0 to 16, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 2189 mAh/cc, and was thus higher than the discharge capacity of natural graphite (660 to 790 mAh/cc), which has high crystallinity. A coulomb efficiency of the nonaqueous test cell according to the present example was 74.3%. A capacity maintenance rate of the nonaqueous test cell according to the present example was 69.3% (See Table 3).

### [Example 40]

A mixture of 12.55 g of barium, 0.92 g of aluminum, 3.70 g of silver and 12.83 g of silicon was prepared as a raw material. A composition of the raw material corresponded to Ba₈Al₃Ag₃Si₄₀, and the raw material was the same as that of Example 12. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. As described above, the negative-electrode active material was formed of aluminum atoms, silver atoms, barium, which corresponds to first metal atoms, and silicon, which corresponds to second metal atoms.

A compound composition of the negative-electrode active material was non-identifiable. Using the negative-electrode active material, battery characterization of a negative electrode was performed in such a manner as in Example 1.

A discharge capacity of the negative-electrode active material according to the present example was 2348 mAh/cc, and was thus higher than the discharge capacity of natural graphite (660 to 790 mAh/cc), which has high crystallinity. Furthermore, the discharge capacity in the present example was higher than that of Example 12 in which no nanograining was performed. Also, a coulomb efficiency of the nonaqueous test cell according to the present example was 79.3%. Also, a capacity maintenance rate of the nonaqueous test cell according to the present example was 80.4% (See Table 3).

### [Example 41]

A mixture of 9.68 g of barium, 10.42 g of gold and 9.90 g of silicon was prepared as a raw material. A composition of the raw material corresponded to Ba₈Au₆Si₄₀. The raw material was melted in an argon arc furnace and was cooled by a water-cooling mold. Furthermore, the ground product that has passed through openings of 20 µm was nanograined. An average crystal grain diameter was 53.1 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Au₆Si₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 3875 mAh/cc, and was thus higher than the discharge capacity of natural graphite (660 to 790 mAh/cc), which has high crystallinity. A coulomb efficiency of the nonaqueous test cell according to the present example was 84.2%. A capacity maintenance rate of the nonaqueous test cell according to the present example was 92.6% and thus high (See Table 3).

### [Example 42]

A mixture of 13.79 g of barium and 16.21 g of silicon was prepared as a raw material. A composition of the raw material corresponded to Ba₈Si₄₆. The raw material was melted in an argon arc furnace and was cooled by a water-cooling mold. Furthermore, the ground product that has passed through openings of 20 µm was nanograined. An average crystal grain diameter was 46.3 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Si₄₆. Where the composition of the negative-electrode active material is AₓB_{y}C_{z} as described above, x (= 8) was within a range of 7 to 9, y (=0) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 2806 mAh/cc, and was thus higher than the discharge capacity of natural graphite (660 to 790 mAh/cc), which has high crystallinity. A coulomb efficiency of the nonaqueous test cell according to the present example was 84.3%. A capacity maintenance rate of the nonaqueous test cell according to the present example was 93.2% and thus high (See Table 3).

### [Example 43]

A mixture of 5.29 g of barium, 1.84 g of copper and 22.87 g of tin was prepared as a raw material. A composition of the raw material corresponded to Ba₈Cu₆Sn₄₀. The raw material was melted in an argon arc furnace and was cooled by a water-cooling mold. Furthermore, the ground product that has passed through openings of 20 µm was nanograined. An average crystal grain diameter of the grains was 103.2 nm. With the rest of the conditions that was similar to that of Example 1, a negative-electrode active material for a lithium ion battery was produced. As a result of X-ray diffraction measurement of the resulting nanograins being performed by an X-ray diffractometer (RINT-1100), diffraction peaks were observed, and thus, it turned out that the nanograins were crystalline products. A compound composition of the negative-electrode active material was Ba₈Cu₆Sn₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 5386 mAh/cc, and was thus higher than the discharge capacity of natural graphite (660 to 790 mAh/cc), which has high crystallinity. A coulomb efficiency of the nonaqueous test cell according to the present example was 80.4%. A capacity maintenance rate of the nonaqueous test cell according to the present example was 91.0% (See Table 4).

### [Example 44]

A mixture of 5.43 g of barium, 1.88 g of indium and 22.69 g of tin was prepared as a raw material. A composition of the raw material corresponded to Ba₈In₆Sn₄₀. The raw material was melted in an argon arc furnace and was cooled by a water-cooling mold. Furthermore, the ground product that has passed through openings of 20 µm was nanograined. An average crystal grain diameter was 169.7 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈In₆Sn₄₀. Where the composition of the negative-electrode active material is AₓB_{y}C_{z} as described above, x (= 8) was within a range of 7 to 9, y (= 6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 4682 mAh/cc, and was thus higher than the discharge capacity of natural graphite (660 to 790 mAh/cc), which has high crystallinity. A coulomb efficiency of the nonaqueous test cell according to the present example was 82.5%. A capacity maintenance rate of the nonaqueous test cell according to the present example was 95.4% and thus high (See Table 4).

### [Example 45]

A mixture of 5.26 g of barium, 2.00 g of gallium and 22.74 g of tin was prepared as a raw material. A composition of the raw material corresponded to Ba₈Ga₆Sn₄₀. The raw material was melted in an argon arc furnace and was cooled by a water-cooling mold. Furthermore, the ground product that has passed through openings of 20 µm was nanograined. An average crystal grain diameter was 86.3 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Ga₆Sn₄₀. Where the composition of the negative-electrode active material is AₓB_{y}C_{z} as described above, x (= 8) was within a range of 7 to 9, y (=6) was within a range of 0 to 16, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 5011 mAh/cc, and was thus higher than the discharge capacity of natural graphite (660 to 790 mAh/cc), which has high crystallinity. A coulomb efficiency of the nonaqueous test cell according to the present example was 82.1%. A capacity maintenance rate of the nonaqueous test cell according to the present example was 90.1% and thus high (See Table 4).

### [Example 46]

A mixture of 5.71 g of barium, 5.79 g of gallium and 18.50 g of tin was prepared as a raw material. A composition of the raw material corresponded to Ba₈Ga₁₆Sn₃₀. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₈Ga₁₆Sn₃₀. Where the composition of the negative-electrode active material is AₓB_{y}C_{z} as described above, x (= 8) was within a range of 7 to 9, y (=16) was within a range of 0 to 16, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 4032 mAh/cc, and was thus higher than the discharge capacity of natural graphite (660 to 790 mAh/cc), which has high crystallinity. A coulomb efficiency of the nonaqueous test cell according to the present example was 82.2%. A capacity maintenance rate of the nonaqueous test cell according to the present example was 94.2% and thus high (See Table 4).

### [Example 47]

A mixture of 11.51 g of barium, 0.48 g of calcium, 4.56 g of copper and 13.45 g of silicon was prepared as a raw material. A composition of the raw material corresponded to Ba₇Ca₁Cu₆Si₄₀. The raw material was melted in an argon arc furnace and was cooled by a water-cooling mold. Furthermore, the ground product that has passed through openings of 20 µm was nanograined. An average crystal grain diameter was within a range of 1 to 300 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba₇Ca₁Cu₆Si₄₀. Where the composition of the negative-electrode active material is AₓB_{y}C_{z} as described above, x (=7+1= 8) was within a range of 7 to 9, y (=6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 2532 mAh/cc, and was thus higher than the discharge capacity of natural graphite (660 to 790 mAh/cc), which has high crystallinity. Furthermore, the discharge capacity in the present example was higher than that of Example 14 in which Ca was not contained as a substitution element for Ba. A coulomb efficiency of the nonaqueous test cell according to the present example was 84.2%. A capacity maintenance rate of the nonaqueous test cell according to the present example was 92.3% and thus high (See Table 4).

### [Example 48]

A mixture of 13.58 g of barium, 2.10 g of lithium-aluminum alloy (containing 1% of Li) and 14.33 g of silicon was prepared as a raw material. A composition of the raw material corresponded to Ba_{7.75}Li_{0.25}Al₆Si₄₀. The raw material was melted in an argon arc furnace and was cooled by a water-cooling mold. Furthermore, the ground product that has passed through openings of 20 µm was nanograined. An average crystal grain diameter was 18.4 nm. With the rest of the conditions that was similar to that of Example 1, a negative-electrode active material for a lithium ion battery was produced. X-ray diffraction measurement of the resulting nanograins was performed by an X-ray diffractometer (RINT-1100). As a result, diffraction peaks were observed, and thus, it turned out that the nanograins were crystalline products. A compound composition of the negative-electrode active material was Ba_{7.75}Li_{0.25}Al₆Si₄₀. Where the composition of the negative-electrode active material is AₓB_{y}C_{z} as described above, x (=7.75+0.25= 8) was within a range of 7 to 9, y (=6) was within a range of 0 to 6, and (y+z)/x (= 5.75) was within a range of 5.1 to 6.6. Using the negative-electrode active material, battery characterization of a negative electrode was performed in such a manner as in Example 1.

A discharge capacity of the negative-electrode active material according to the present example was 2617 mAh/cc, and was thus higher than the discharge capacity of natural graphite (660 to 790 mAh/cc), which has high crystallinity. Furthermore, the discharge capacity in the present example was higher than that of Examples 38 and 39 in which Li was not contained as a substitution element for Ba. A coulomb efficiency of the nonaqueous test cell according to the present example was 95.4%. A capacity maintenance rate of the nonaqueous test cell according to the present example was 90.3% and thus high (See Table 4).

**[Table 1]**

| | Raw material composition | Compound composition | Process of production | Battery characteristics | | |
|---|---|---|---|---|---|---|
| | | | | Discharge capacity | coulombefficiency | Capacity maintenance rate |
| | | | | (mAh/cc) | (%) | (%) |
| Example 1 | Ba₈Cu₅Si₄₁ | Ba₈Cu₅Si₄₁ | | 423 | 59.0 | 302 |
| Example 2 | Ba₈Cu₆Si₄₀ | Ba₈Cu₆Si₄₀ | | 398 | 52.6 | 354 |
| Example 3 | Ba₈Cu₇Si₃₉ | Ba₈Cu₆Si₄₀ | | 348 | 51.3 | 331 |
| Example 4 | Ba₈Ni₅Si₄₁ | Ba₈Ni₅Si₄₁ | | 815 | 70.0 | 224 |
| Example 5 | Ba₈Ni₆Si₄₀ | Ba₈Ni₆Si₄₀ | Arc melting | 469 | 58.8 | 362 |
| Example 6 | Ba₈Ni₇Si₃₉ | Ba₈Ni₆Si₄₀ | ⇓ | 335 | 53.1 | 325 |
| Example 7 | Ba₈Ag₅Si₄₁ | Ba₈Ag₅Si₄₁ | Grinding | 5405 | 83.3 | 36 |
| Example 8 | Ba₈Ag₆Si₄₀ | Ba₈Ag₆Si₄₀ | | 5525 | 82.9 | 30 |
| Example 9 | Ba₈Ag₇Si₃₉ | Ba₈Ag₆Si₄₀ | | 5693 | 83.4 | 32 |
| Example 10 | Ba₈Co₆Si₄₀ | Ba₈Co₆Si₄₀ | | 581 | 64.3 | 328 |
| Example 11 | Ba₈Al₁₆Si₃₀ | Ba₈Al₁₆Si₃₀ | | 288 | 55.3 | 163 |
| Example 12 | Ba₈Al₃Ag₃Si₄₀ | Non-identifiable | | 2141 | 74.1 | 110 |

**[Table 2]**

| | Raw material composition | Compound composition | Process of production | Battery characteristics | | |
|---|---|---|---|---|---|---|
| | | | | Discharge capacity (mAh/cc) | Coulomb fficiency (%) | Capacity maintenance rate (%) |
| Example 13 | Ba₈Cu₅Si₄₁ | Ba₈Cu₅Si₄₁ | | 2842 | 80.6 | 90.2 |
| Example 14 | Ba₈Cu₆Si₄₀ | Ba₈Cu₆Si₄₀ | | 2615 | 83.1 | 93.1 |
| Example 15 | Ba₈Cu₇Si₃₉ | Ba₈Cu₆Si₄₀ | | 2389 | 81.3 | 96.1 |
| Example 16 | Ba₈Cu₈Si₃₈ | Ba₈Cu₆Si₄₀ | | 996 | 79.4 | 87.3 |
| Example 17 | Ba₇Cu₆Si₄₀ | Ba₈Cu₆Si₄₀ | Arc melting | 1682 | 75.4 | 90.1 |
| Example 18 | Ba₉Cu₆Si₄₀ | Ba₈Cu₆Si₄₀ | ⇓ | 1735 | 76.8 | 88.4 |
| Example 19 | Ba₆Cu₆Si₄₀ | Ba₈Cu₆Si₄₀ | Grinding | 875 | 63.7 | 90.4 |
| Example 20 | Ba₁₀Cu₆Si₄₀ | Ba₈Cu₆Si₄₀ | ⇓ | 721 | 70.1 | 93.1 |
| Example 21 | Ba₈Ni₅Si₄₁ | Ba₈Ni₅Si₄₁ | Ball milling | 3324 | 78.6 | 85.2 |
| Example 22 | Ba₈Ni₆Si₄₀ | Ba₈Ni₆Si₄₀ | | 3071 | 77.1 | 91.4 |
| Example 23 | Ba₈Ni₇Si₃₉ | Ba₈Ni₆Si₄₀ | | 2886 | 75.8 | 99.6 |
| Example 24 | Ba₈Ni₈Si₃₈ | Ba₈Ni₆Si₄₀ | | 845 | 80.6 | 89.4 |
| Example 25 | Ba₇Ni₆Si₄₀ | Ba₈Ni₆Si₄₀ | | 1811 | 76.8 | 85.4 |
| Example 26 | Ba₉Ni₆Si₄₀ | Ba₈Ni₆Si₄₀ | | 1463 | 77.9 | 83.5 |
| Example 27 | Ba₆Ni₆Si₄₀ | Ba₈Ni₆Si₄₀ | | 931 | 72.1 | 91.3 |
| Example 28 | Ba₁₀Ni₆Si₄₀ | Ba₈Ni₆Si₄₀ | | 914 | 69.0 | 94.6 |

**[Table 3]**

| | Raw material composition | Compound composition | Process of production | Battery characteristics | | |
|---|---|---|---|---|---|---|
| | | | | Discharge capacity (mAh/cc) | Coulomb efficiency (%) | Capacity maintenance rate (%) |
| Example 29 | Ba₈Ag₅Si₄₁ | Ba₈Ag₅Si₄₁ | | 5257 | 84.3 | 70.6 |
| Example 30 | Ba₈Ag₆Si₄₀ | Ba₈Ag₆Si₄₀ | | 5391 | 83.2 | 71.0 |
| Example 31 | Ba₈Ag₇Si₃₉ | Ba₈Ag₆Si₄₀ | | 5601 | 83.5 | 74.4 |
| Example 32 | Ba₈Ag₈Si₃₈ | Ba₈Ag₆Si₄₀ | | 3215 | 72.1 | 81.3 |
| Example 33 | Ba₇Ag₆Si₄₀ | Ba₈Ag₆Si₄₀ | Arc melting | 4867 | 76.2 | 83.0 |
| Example 34 | Ba₉Ag₆S₄₀ | Ba₈Ag₆Si₄₀ | ⇓ | 4993 | 75.8 | 84.2 |
| Example 35 | Ba₆Ag₆Si₄₀ | Ba₈Ag₆Si₄₀ | Grinding | 3684 | 71.0 | 82.6 |
| Example 36 | Ba₁₀Ag₆Si₄₀ | Ba₈Ag₆Si₄₀ | ⇓ | 3259 | 69.5 | 83.1 |
| Example 37 | Ba₈Co₆Si₄₀ | Ba₈Co₆S₄₀ | Ball milling | 3418 | 80.6 | 91.7 |
| Example 38 | Ba₈Al₁₆Si₃₀ | Ba₈Al₁₆Si₃₀ | | 2378 | 80.4 | 92.1 |
| Example 39 | Ba₈Al₁₇Si₂₉ | Ba₈Al₁₆Si₃₀ | | 2189 | 74.3 | 69.3 |
| Example 40 | Ba₈Al₃Ag₃Si₄₀ | Non-identifiable | | 2348 | 79.3 | 80.4 |
| Example 41 | Ba₈Au₆Si₄₀ | Ba₈Au₆Si₄₀ | | 3875 | 84.2 | 92.6 |
| Example 42 | Ba₈Si₄₆ | Ba₈Si₄₆ | | 2806 | 84.3 | 93.2 |

**[Table 4]**

| | Raw material composition | Compound composition | Process of production | Battery characteristics | | |
|---|---|---|---|---|---|---|
| | | | | Discharge capacity (mAh/cc) | Coulomb efficiency (%) | Capacity maintenance rate (%) |
| Example 43 | Ba₈Cu₆Sn₄₀ | Ba₈Cu₆Sn₄₀ | Arc melting | 5386 | 80.4 | 91.0 |
| Example 44 | Ba₈In₆Sn₄₀ | Ba₈In₆Sn₄₀ | ⇓ | 4682 | 82.5 | 95.4 |
| Example 45 | Ba₈Ga₆Sn₄₀ | Ba₈Ga₆Sn₄₀ | Grinding | 5011 | 82.1 | 90.1 |
| Example 46 | Ba₈Ga₁₆Sn₃₀ | Ba₈Ga₁₆Sn₃₀ | ⇓ | 4032 | 82.2 | 94.2 |
| Example 47 | Ba₇Ca₁Cu₆Si₄₀ | Ba₇Ca₁Cu₆Si₄₀ | Ball milling | 2532 | 84.2 | 92.3 |
| Example 48 | Ba_{7.75}Li_{0.25}Al₆Si₄₀ | Ba_{7.75}Li_{0.25}Al₆Si₄₀ | | 2617 | 95.4 | 90.3 |

An embodiment of the present invention has been described above. However, the above-described embodiment is a mere example for carrying out the present invention. Therefore, the present invention is not limited to the above-described embodiment, and the above-described embodiment can arbitrarily be altered to implement the present invention without departing from the spirit of the invention.

## Claims

1. An electrode active material comprising a clathrate compound containing a crystal lattice and a guest substance encapsulated in the crystal lattice.

2. The electrode active material according to claim 1, wherein the clathrate compound is nanograined.

3. The electrode active material according to claim 1 or 2, wherein:
the guest substance contains at least one element selected from a group consisting of barium (Ba), calcium (Ca) and lithium (Li); and
the crystal lattice contains at least one element selected from a group consisting of gallium (Ga), aluminum (Al), indium (In), silver (Ag), gold (Au), copper (Cu), nickel (Ni) and cobalt (Co), and at least one element selected from a group consisting of silicon (Si) and tin (Sn).

4. The electrode active material according to claim 3, wherein:
the clathrate compound has a composition of AₓB_{y}C_{z};
the A contains at least one element selected from a group consisting of barium (Ba), calcium (Ca) and lithium (Li);
the B contains at least one element selected from a group consisting of indium (In), silver (Ag), gold (Au), copper (Cu), nickel (Ni) and cobalt (Co);
the C contains at least one element selected from a group consisting of silicon (Si) and tin (Sn);
the x is 7 to 9;
the y is 0 to 6; and
(y+z)/x is 5.1 to 6.6.

5. The electrode active material according to claim 3, wherein:
the clathrate compound has a composition of AₓAl_{y}C_{z};
the A contains at least one element selected from a group consisting of barium (Ba), calcium (Ca) and lithium (Li);
the C contains at least one element selected from a group consisting of silicon (Si) and tin (Sn);
the x is 7 to 9;
the y is 0 to 16; and
(y+z)/x is 5.1 to 6.6.

6. The electrode active material according to claim 3, wherein:
the clathrate compound has a composition of AₓGa_{y}C_{z};
the A contains at least one element selected from a group consisting of barium (Ba), calcium (Ca) and lithium (Li);
the C contains at least one element selected from a group consisting of silicon (Si) and tin (Sn);
the x is 7 to 9;
the y is 0 to 16; and
(y+z)/x is 5.1 to 6.6.

7. The electrode active material according to claim 3, wherein:
the clathrate compound has a composition of AₓCu_{y}C_{z};
the A contains at least one element selected from a group consisting of barium (Ba), calcium (Ca) and lithium (Li);
the C contains at least one element selected from a group consisting of silicon (Si) and tin (Sn);
the x is 7 to 9;
the y is 0 to 6; and
(y+z)/x is 5.1 to 6.6.

8. The electrode active material according to claim 3, wherein:
the clathrate compound has a composition of AₓNi_{y}C_{z};
the A contains at least one element selected from a group consisting of barium (Ba), calcium (Ca) and lithium (Li);
the C contains at least one element selected from a group consisting of silicon (Si) and tin (Sn);
the x is 7 to 9;
the y is 0 to 6; and
(y+z)/x is 5.1 to 6.6.

9. The electrode active material according to claim 3, wherein:
the clathrate compound has a composition of AₓAg_{y}C_{z};
the A contains at least one element selected from a group consisting of barium (Ba), calcium (Ca) and lithium (Li);
the C contains at least one element selected from a group consisting of silicon (Si) and tin (Sn);
the x is 7 to 9;
the y is 0 to 6; and
(y+z)/x is 5.1 to 6.6.

10. The electrode active material according to claim 3, wherein:
the clathrate compound has a composition of AₓB_{y}Sn_{z};
the A contains at least one element selected from a group consisting of barium (Ba), calcium (Ca) and lithium (Li);
the B contains at least one element selected from a group consisting of indium (In), silver (Ag), gold (Au), copper (Cu), nickel (Ni) and cobalt (Co);
the x is 7 to 9;
the y is 0 to 6; and
(y+z)/x is 5.1 to 6.6.

11. An electrode comprising an electrode active material according to any one of claims 1 to 10.

12. A battery comprising an electrode according to claim 11.

13. A method for using a clathrate compound containing a crystal lattice and a guest substance encapsulated in the crystal lattice, as an electrode active material.

14. An electrode active material production method comprising:
a preparation step of preparing a clathrate compound; and
a nanograining step of nanograining the clathrate compound.

15. An electrode active material produced by the production method according to claim 14.

16. The electrode active material according to claim 15, wherein:
the clathrate compound includes an aluminum atom, a silver atom, a first metal atom and a second metal atom;
the first metal atom contains at least one element of barium (Ba), calcium (Ca) and lithium (Li); and
the second metal atom contains at least one element of silicon (Si) and tin (Sn).
